# EUROPEAN PATENT APPLICATION

(11) **EP 3 382 447 A1**
(43) Date of publication of application: **03.10.2018**
(21) Application number: 17209365.0
(22) Date of filing: 21.12.2017
(51) Int. Cl.: G02F 1/1335

(54) **DISPLAY**

(30) Priority: 27.03.2017 TW 106110185
(71) Applicant: AU Optronics Corporation, Hsin-Chu (TW)
(72) Inventor: HSU, Chia-Chun, Hsin-Chu (TW); KUO, Yu-Ping, Hsin-Chu (TW); GUO, Wen-Rei, Hsin-Chu (TW)
(74) Representative: Perronace, Andrea

(57) **Abstract**

The present disclosure discloses a display. The display includes a plurality of first pixels, a plurality of second pixels and a light-shielding unit. The second pixels are disposed around the first pixels. The light-shielding unit is disposed around the second pixels. Each of the second pixels is a white pixel, and the second pixels are sandwiched between the light-shielding unit and the first pixels.

## Description

### BACKGROUND

### Technical Field

The present disclosure relates to an image processing apparatus, and in particular, to a display.

### Related Art

With rapid development of display technologies, displays are widely applied to human life and play an increasingly important role. For example, displays, as display interfaces, may be applied to various fields such as motion monitoring, domestic life, healthcare, and vehicle traffic. Currently, shapes of conventional displays are often designed into in a square shape or a rectangular shape instead of being adaptively designed according to requirements of users. Therefore, when shapes of displays are directly designed according to requirements of users, jaggies may occur on edges of the displays, resulting in defects on appearances of the displays. Hence, the user experience may be greatly affected.

As can be seen, inconvenience and disadvantages still exist in the foregoing existing manner and need to be overcome. To resolve the foregoing problem, efforts have been made for solutions in related fields. However, no appropriate solution has been developed for a long time.

### SUMMARY

An embodiment disclosed in the present disclosure relates to a display. The display includes a plurality of first pixels, a plurality of second pixels and a light-shielding unit. The second pixels are disposed around the first pixels. The light-shielding unit is disposed around the second pixels. Each of the second pixels is a white pixel, and the second pixels are sandwiched between the light-shielding unit and the first pixels.

Based on the above, as compared with the prior art, the technical solution in the present disclosure has apparent advantages and beneficial effects. By means of the technical solution above, a great technical progress may be achieved, and the present disclosure has a value of being widely applied to the industry. In the display disclosed in the present disclosure, the first pixels are sequentially surrounded by the light-shielding unit and the second pixels, and the second pixels are sandwiched between the light-shielding unit and the first pixels. In addition, the second pixels are configured as white pixels. Therefore, the display disclosed in the present disclosure not only can effectively reduce jaggies on edges of a display, but also can reduce rainbow veins on edges of a display that are generated because of use of a light-shielding unit, thereby improving quality of experience of users.

### BRIEF DESCRIPTION OF THE DRAWINGS

FIG. 1A, FIG. 1B, FIG. 1C and FIG. ID are schematic diagrams of a display according to an embodiment disclosed in the present disclosure;
FIG. 2A and FIG. 2B are schematic diagrams of a display according to an embodiment disclosed in the present disclosure; and
FIG. 3A and FIG. 3B are schematic diagrams of a display according to an embodiment disclosed in the present disclosure.

### DETAILED DESCRIPTION

Detailed description is provided below with reference to the embodiments and the accompanying drawings to further understand the embodiments of the present disclosure. However, the provided embodiments are not used to limit the scope of the present disclosure. The description of structures and operations are not used to limit an execution sequence of the operations. Any apparatus having equivalent efficacy produced by using a structure of recombined elements falls within the scope of the present disclosure. In addition, according to standard and common measures in the industry, the drawings are only used for the purpose of assisting description and are not drawn by original sizes, and in fact, sizes of various features can be randomly increased or reduced for ease of description. The same elements are described by using the same symbols in the following description for ease of understanding.

The terms used in the entire specification and the claims, unless specifically indicated, usually have common meanings of the terms used in the art and in the disclosed content and special content. Some terms used to describe the present disclosure are discussed below or somewhere else in this specification, so as to provide additional guidance in the description of the present disclosure to a person skilled in the art.

In addition, the terms "comprise", "include", "have", "contain" and the like used herein are all non-exclusive words, that is, refer to "include, but is not limited thereto".

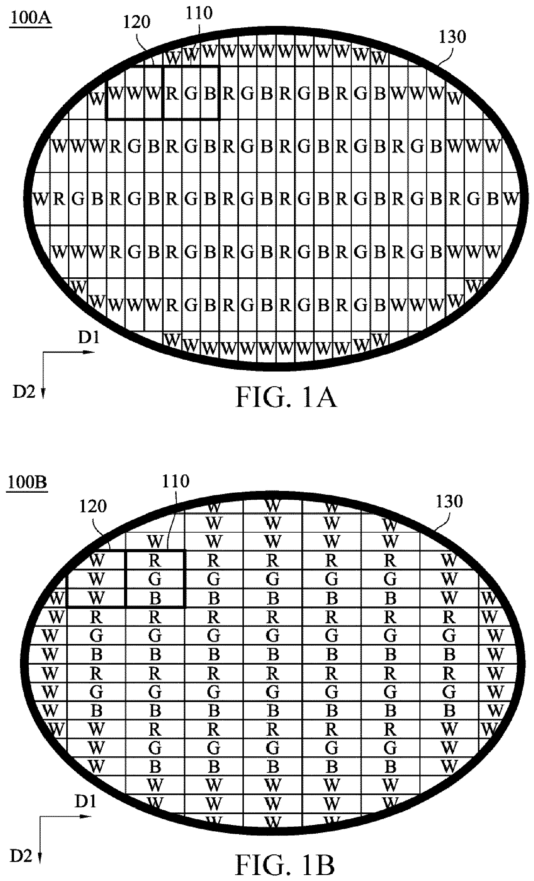

FIG. 1A is a schematic diagram of a display according to an embodiment disclosed in the present disclosure. As shown in FIG. 1A, a display 100A includes a plurality of first pixels 110, a plurality of second pixels 120, and a light-shielding unit 130. The second pixels 120 are disposed around the first pixels 110, and the light-shielding unit 130 is disposed around the second pixels 120. In this embodiment, each of the second pixels 120 is a white pixel, and the second pixels 120 are sandwiched between the light-shielding unit 130 and the first pixel 110.

In an embodiment, the first pixels 110 are adjacent to each other, and the second pixels 120 are adjacent to each other. For example, referring to FIG. 1A, because the first pixels 110 are adjacent to each other, there is no gap between different first pixels 110. Similarly, because the second pixels 120 are adjacent to each other, there is no gap between different second pixels 120. In another embodiment, the first pixels 110 are adjacent to the second pixels 120, and the second pixels 120 are adjacent to the light-shielding unit 130. For example, referring to FIG. 1A, because the first pixels 110 are adjacent to the second pixels 120, there is no gap between the first pixels 110 and the second pixels 120. Similarly, because the second pixels 120 are adjacent to the light-shielding unit 130, there is no gap between the second pixels 120 and the light-shielding unit 130.

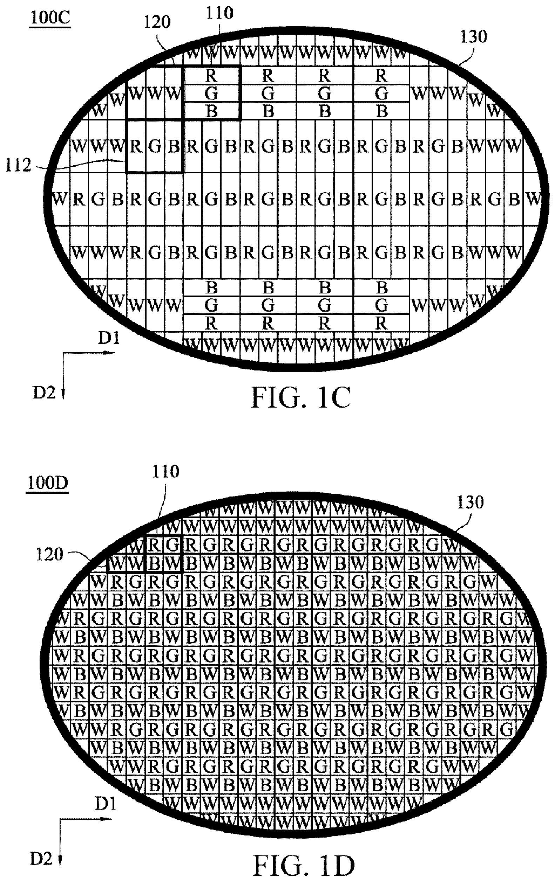

In an embodiment, referring to FIG. 1A, FIG. 1B, and FIG. 1C, FIG. 1B and FIG. 1C are schematic diagrams of a display according to an embodiment disclosed in the present disclosure. Each first pixel 110 includes a red sub-pixel R, a green sub-pixel G and a blue sub-pixel B. The red sub-pixel R, the green sub-pixel G and the blue sub-pixel B in each first pixel 110 are arranged in a first direction D1 or a second direction D2 in the display 100A, and the first direction D1 is substantially perpendicular to the second direction D2.

In some embodiments, the red sub-pixel R, the green sub-pixel G, and the blue sub-pixel B in each first pixel 110 are sequentially arranged in the first direction D1. For example, as shown in FIG. 1A, sub-pixels in the first direction D1 in each first pixel 110 are sequentially the red sub-pixel R, the green sub-pixel G, and the blue sub-pixel B. It should be known that the foregoing embodiment is merely an example of feasible manners of arranging the red sub-pixel R, the green sub-pixel G, and the blue sub-pixel B in the first pixel 110, and is not intended to limit the present disclosure. For example, an arrangement sequence of the red sub-pixel R, the green sub-pixel G and the blue sub-pixel B in the first pixel 110 may be adjusted correspondingly according to an actual requirement. In this embodiment, the second pixels 120 are white pixels, and each of the second pixels 120 includes a plurality of white sub-pixels W. The white sub-pixels W in each second pixel 120 are sequentially arranged in the first direction D1. In another embodiment, blank blocks above the first pixels 110 shown in FIG. 1A may be filled up with white sub-pixels W. Likewise, blank blocks to the left of the second pixels 120 shown in FIG. 1A may also be filled up with white sub-pixels W. Further, other blank blocks in FIG. 1A may also be filled up with white sub-pixels W.

In some embodiments, the red sub-pixel R, the green sub-pixel G and the blue sub-pixel B in each first pixel 110 are sequentially arranged in the second direction D2. For example, as shown in FIG. 1B, sub-pixels in the second direction D2 in each first pixel 110 are sequentially the red sub-pixel R, the green sub-pixel G and the blue sub-pixel B. It should be known that the foregoing embodiment is merely an example of feasible manners of arranging the red sub-pixel R, the green sub-pixel G and the blue sub-pixel B in each first pixel 110, and is not intended to limit the present disclosure. For example, an arrangement sequence of the red sub-pixel R, the green sub-pixel G and the blue sub-pixel B in the first pixel 110 may be adjusted correspondingly according to an actual requirement. In this embodiment, the second pixels 120 are white pixels, and each of the second pixels 120 includes a plurality of white sub-pixels W. The white sub-pixels W in each second pixel 120 are sequentially arranged in the second direction D2. In another embodiment, blank blocks to the left of second pixels 120 shown in FIG. 1B may be filled up with white sub-pixels W. Further, other blank blocks in FIG. 1B may also be filled up with white sub-pixels W.

In some embodiments, the red sub-pixels R, the green sub-pixels G and the blue sub-pixels B in some first pixels 110 are sequentially arranged in the first direction D1, and the red sub-pixels R, the green sub-pixels G and the blue sub-pixels B in other first pixels 110 are sequentially arranged in the second direction D2. For example, as shown in FIG. 1C, sub-pixels in the first direction D1 in the first pixel 112 are sequentially a red sub-pixel R, a green sub-pixel G and a blue sub-pixel B. Sub-pixels in the second direction D2 in the first pixel 110 are sequentially a red sub-pixel R, a green sub-pixel G and a blue sub-pixel B. It should be known that the foregoing embodiment is merely used to exemplify feasible manners of arranging the red sub-pixels R, the green sub-pixels G and the blue sub-pixels B in the first pixel 110 and the first pixel 112, and is not intended to limit the present disclosure. For example, arrangement sequences of the red sub-pixels R, the green sub-pixels G and the blue sub-pixels B in the first pixel 110 and the first pixel 112 may be adjusted correspondingly according to an actual requirement. In this embodiment, the second pixels 120 are white pixels, and each of the second pixels 120 includes a plurality of white sub-pixels W. The white sub-pixels W in each second pixel 120 are sequentially arranged in the first direction D1. In another embodiment, blank blocks above the first pixels 110 shown in FIG. 1C may be filled up with white sub-pixels W. Likewise, blank blocks to the left of the second pixels 120 in FIG. 1C may also be filled up with white sub-pixels W. Further, other blank blocks in FIG. 1C may also be filled up with white sub-pixels W.

In some embodiments, referring to FIG. ID, FIG. ID is a schematic diagram of a display according to an embodiment disclosed in the present disclosure. Each first pixel 110 further includes a white sub-pixel W, and a red sub-pixel R, a green sub-pixel G, a blue sub-pixel B and a white sub-pixel W in each first pixel 110 are arranged in a square shape in a first direction D1 or a second direction D2. It should be known that the foregoing embodiment is merely an example of feasible manners of arranging the red sub-pixel R, the green sub-pixel G, the blue sub-pixel B and the white sub-pixel W in each first pixel 110, and is not intended to limit the present disclosure. For example, an arrangement sequence of the red sub-pixel R, the green sub-pixel G, the blue sub-pixel B and the white sub-pixel W in the first pixel 110 may be adjusted correspondingly according to an actual requirement. In this embodiment, the second pixels 120 are white pixels, and each of the second pixels 120 includes a plurality of white sub-pixels W. The white sub-pixels W in each second pixel 120 are arranged in a square shape in the first direction D1 or the second direction D2. In another embodiment, blank blocks above the first pixels 110 shown in FIG. ID may be filled up with white sub-pixels W. Likewise, blank blocks to the left of the second pixels 120 shown in FIG. ID may also be filled up with white sub-pixels W. Further, other blank blocks in FIG. 1D may also be filled up with white sub-pixels W.

In an embodiment, transmittance of the white sub-pixels W in the second pixel 120 may be adjusted in correspondence with design of an array (for example, different types of array shapes), design of a color filter (CF) substrate (for example, an aperture ratio of the white sub-pixels W, film thickness of the color filter substrate of the white sub-pixels W, or color resistance density of the white sub-pixels W), or design of a liquid crystal layer (for example, a multi-gap on CF (MOC) architecture or a multi-gap on array (MOA) architecture). In this way, optical properties of the white sub-pixels W may be increased or reduced according to an actual requirement.

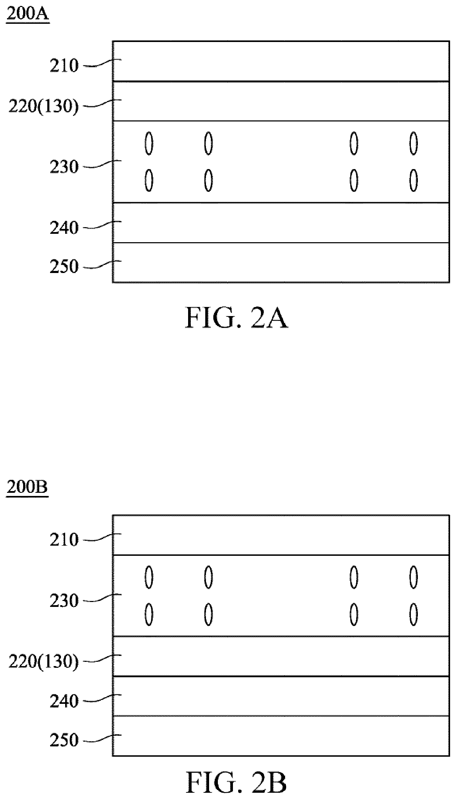

FIG. 2A and FIG. 2B are schematic diagrams of a display according to an embodiment disclosed in the present disclosure. In an embodiment, a display 200A shown in FIG. 2A and a display 200B shown in FIG. 2B may both be applied to the display 100A shown in FIG. 1A, the display 100B shown in FIG. 1B, a display 100C shown in FIG. 1C, or a display 100D shown in FIG. ID, but the present disclosure is not limited thereto. First, referring to FIG. 2A, the display 200A includes an upper substrate component 210, a color filter substrate 220, a liquid crystal layer 230, a transistor array substrate 240 and a lower substrate component 250. In an embodiment, a light-shielding unit 130 is disposed on the color filter substrate 220. In another embodiment, the light-shielding unit 130 and the color filter substrate 220 are integrated on a same layer and are disposed between the substrate component 210 and the liquid crystal layer 230.

In addition, referring to FIG. 2B, an architecture of the display 200B is similar to that of the display 200A. The display 200B mainly differs from the display 200A in that in the display 200B, a light-shielding unit 130 and a color filter substrate 220 are integrated on a same layer and are disposed between a liquid crystal layer 230 and a transistor array substrate 240. In this embodiment, the light-shielding units 130 shown in FIG. 2A and FIG. 2B may be implemented by using black matrices (BMs). In some embodiments, the liquid crystal bodies 230 in FIG. 2A and in FIG. 2B may be implemented by using materials related to organic light-emitting diodes (OLEDs).

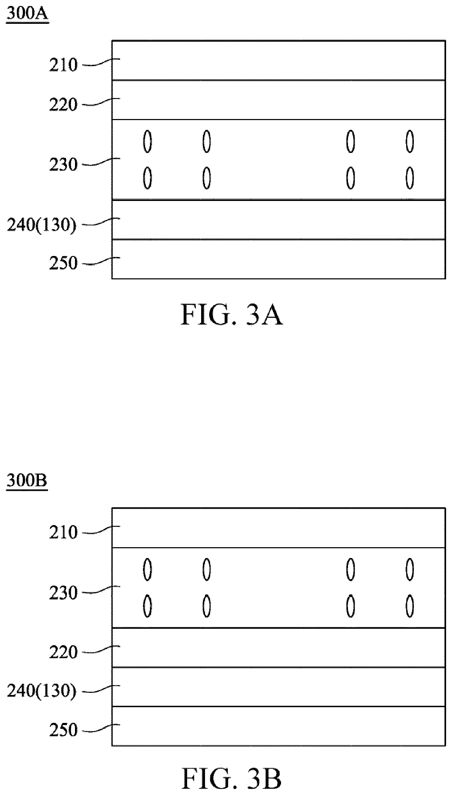

FIG. 3A and FIG. 3B are schematic diagrams of a display according to an embodiment disclosed in the present disclosure. A display 300A shown in FIG. 3A and a display 300B shown in FIG. 3B may both be applied to the display 100A shown in FIG. 1A, the display 100B shown in FIG. 1B, the display 100C shown in FIG. 1C, or the display 100D shown in FIG. ID, but the present disclosure is not limited thereto. First, referring to FIG. 3A, the display 300A includes an upper substrate component 210, a color filter substrate 220, a liquid crystal layer 230, a transistor array substrate 240 and a lower substrate component 250. In an embodiment, a light-shielding unit 130 is disposed on a transistor array substrate 240. In another embodiment, the light-shielding unit 130 and the transistor array substrate 240 are integrated on a same layer and are disposed between the liquid crystal layer 230 and the lower substrate component 250.

In addition, referring to FIG. 3B, an architecture of the display 300B is similar to that of the display 300A. The display 300B mainly differs from the display 300A in that a light-shielding unit 130 and a transistor array substrate 240 in the display 300B are integrated on a same layer and are disposed between a color filter substrate 220 and a lower substrate component 250. In this embodiment, the light-shielding units 130 in FIG. 3A and in FIG. 3B may be implemented by using metal array substrates. In some embodiments, the liquid crystal bodies 230 in FIG. 3A and FIG. 3B may be implemented by using materials related to organic light-emitting diodes (OLEDs).

In the foregoing embodiment, in the display disclosed in the present disclosure, the first pixels are sequentially surrounded by the light-shielding unit and the second pixels, and the second pixels are sandwiched between the light-shielding unit and the first pixels. In addition, the second pixels are configured as white pixels. Therefore, the display disclosed in the present disclosure not only can effectively reduce jaggies on edges of a display, but also can reduce rainbow veins on edges of a display that are generated because of use of a light-shielding unit, thereby improving quality of experience of users.

## Claims

1. A display (100A; 200A; 200B; 300A; 300B), **characterized by** comprising:
a plurality of first pixels (110);
a plurality of second pixels (120), disposed around the first pixels (110); and
a light-shielding unit (130), disposed around the second pixels (120), wherein each of the second pixels (120) is a white pixel, and the second pixels (120) are sandwiched between the light-shielding unit (130) and the first pixels (110).

2. The display (100A; 200A; 200B; 300A; 300B) according to claim 1, wherein the first pixels (110) are adjacent to each other, and the second pixels (120) are adjacent to each other.

3. The display (100A; 200A; 200B; 300A; 300B) according to claim 2, wherein the first pixels (110) are adjacent to the second pixels (120), and the second pixels (120) are adjacent to the light-shielding unit (130).

4. The display (100A; 200A; 200B; 300A; 300B) according to claim 1, wherein each of the first pixels (110) comprises a red sub-pixel (R), a green sub-pixel (G), and a blue sub-pixel (B); and
wherein the red sub-pixel (R), the green sub-pixel (G) and the blue sub-pixel (B) in each of the first pixels (110) are arranged in a first direction (D1) or a second direction (D2) in the display (100A; 200A; 200B; 300A; 300B), and the first direction (D1) is perpendicular to the second direction (D2).

5. The display (100A; 200A; 200B; 300A; 300B) according to claim 4, wherein the red sub-pixel (R), the green sub-pixel (G), and the blue sub-pixel (B) in each of the first pixels (110) are sequentially arranged in the first direction (D1).

6. The display (100A; 200A; 200B; 300A; 300B) according to claim 4, wherein the red sub-pixel (R), the green sub-pixel (G), and the blue sub-pixel (B) in each of the first pixels (110) are sequentially arranged in the second direction (D2).

7. The display (100A; 200A; 200B; 300A; 300B) according to claim 4, wherein the red sub-pixels (R), the green sub-pixels (G), and the blue sub-pixels (B) in some of the first pixels (110) are sequentially arranged in the first direction (D1); and
wherein the red sub-pixels (R), the green sub-pixels (G), and the blue sub-pixels (B) in others of the first pixels (110) are sequentially arranged in the second direction (D2).

8. The display (100A; 200A; 200B; 300A; 300B) according to claim 4, wherein each of the first pixels (110) further comprises a white sub-pixel (W); and
wherein the red sub-pixel (R), the green sub-pixel (G), the blue sub-pixel (B), and the white sub-pixel (W) in each of the first pixels (110) are arranged in a square shape in the first direction (D1) or the second direction (D2).

9. The display (100A; 200A; 200B; 300A; 300B) according to claim 1, further comprises a color filter substrate (220);
wherein the light-shielding unit (130) is disposed on the color filter substrate (220), and the light-shielding unit (130) comprises a black matrix (BM).

10. The display (100A; 200A; 200B; 300A; 300B) according to claim 1, further comprises a transistor array substrate (240);
wherein the light-shielding unit (130) is disposed on the transistor array substrate (240), and the light-shielding unit (130) comprises a metal array substrate.
